Europäisches Patentamt

European Patent Office

Office européen des brevets

(11) Publication number: **0 259 148 B1**

## EUROPEAN PATENT SPECIFICATION

(45) Date of publication of patent specification: **29.01.92**

(51) Int. Cl.⁵: **G11B 7/09**, G02B 7/28, G02B 27/16

(21) Application number: **87307745.7**

(22) Date of filing: **02.09.87**

(54) Focus detector.

(30) Priority: **05.09.86 JP 210031/86**

(43) Date of publication of application:
**09.03.88 Bulletin 88/10**

(45) Publication of the grant of the patent:
**29.01.92 Bulletin 92/05**

(84) Designated Contracting States:
**DE FR GB IT NL**

(56) References cited:
**GB-A- 2 107 483**
**GB-A- 2 120 493**
**US-A- 4 079 248**

(73) Proprietor: **CANON KABUSHIKI KAISHA**
**30-2, 3-chome, Shimomaruko, Ohta-ku**
**Tokyo(JP)**

Proprietor: **CANON DENSHI KABUSHIKI**
**KAISHA**
**1248 Ohaza Shimokagemori**
**Chichibu-shi Saitama-ken(JP)**

(72) Inventor: **Matsui, Hiroshi**
**Sanhaitsu 201, 15-4 Shinjyo 3-chome**
**Nakahara-ku**
**Kawasaki-shi Kanagawa-ken(JP)**
Inventor: **Koyama, Osamu**
**309-2 Idanakanomachi Nakahara-ku**
**Kawasaki-shi Kanagawa-ken(JP)**
Inventor: **Yano, Hideaki**
**13-6 Suge Kitaura 3-chome Tama-ku**
**Kawasaki-shi Kanagawa-ken(JP)**
Inventor: **Nakamura, Yasuo**
**43-14 Kichijyoji Minami-cho, 3-chome**
**Musashino-shi Tokyo(JP)**

(74) Representative: **Beresford, Keith Denis Lewis**
**et al**
**BERESFORD & Co. 2-5 Warwick Court High**
**Holborn**
**London WC1R 5DJ(GB)**

## Description

BACKGROUND OF THE INVENTION

The present invention relates to a focus detector, and more particularly to a focus detector suitable for use in an optical information recording and reproducing apparatus such as an optical disk.

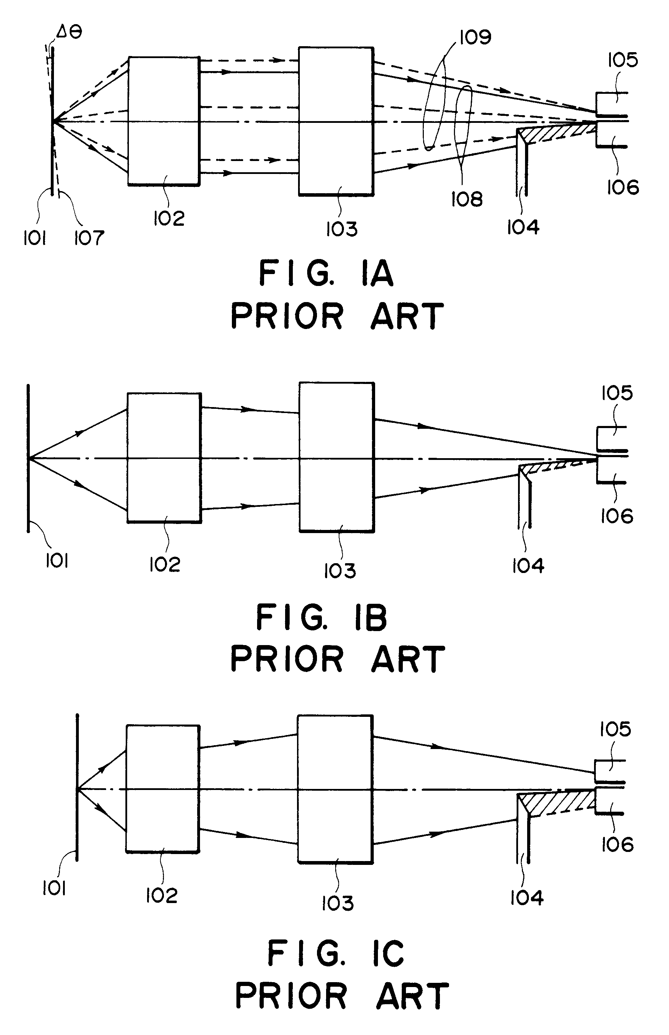

In a prior art optical information recording and reproducing apparatus which records and reproduces information by irradiating a focused light beam to record medium, auto-tracking (AT) of irradiated light beam is essential in order to attain a high record density. For example, U.S. Patent 4,079,248 Fig. 1 - Fig. 2B and specification Col. 2, line 19 - Col. 4, line 60 show and describe a focus detection method for AT.

Figs. 1A - 1C illustrate a principle of a prior art focus detector which uses a knife edge, a light beam reflected by a disk 101 as an information record medium is directed to photo-sensing planes 105 - 106 of a two-split sensor by an objective lens 102 and a sensor lens 103. A knife edge 104 is inserted in a light path of the reflected light beam and it is positioned such that light amounts arriving on the photo-sensing planes 105 and 106 are equal in an in-focus state as shown in Fig. 1A. Thus, when the disk is moved away from the in-focus position as shown in Fig. 1B, the light amount of the light beam directed to one photo-sensing plane 105 decreases and when the disk moves closer as shown in Fig. 1C, the light amount directed to the other photo-sensing plane 106 decreases. Thus, since the light amounts directed to the photo-sensing planes 105 and 106 of the two-split sensor change depending on the defocus state of the disk, a focusing error signal may be obtained by differentiating the outputs of the respective photo-sensing planes.

However, in the above apparatus, if the disk 101 is inclined by $\Delta\theta$ as shown by 107 in Fig. 1A then the inclination of its surface changes due to rotation of the disk and the reflected light 108 shifts as shown by broken lines 109 so that the output of the photo-sensing plane 105 is larger than the output of the photo-sensing plane 106. This state is undistinguishable from the state shown in Fig. 1C where the disk has moved closer and erroneous focus detection takes place. Such an error also occurs by external disturbance such as shift of light beam on the sensor plane or variation in light intensity distribution due to other causes such as movement of the objective lens.

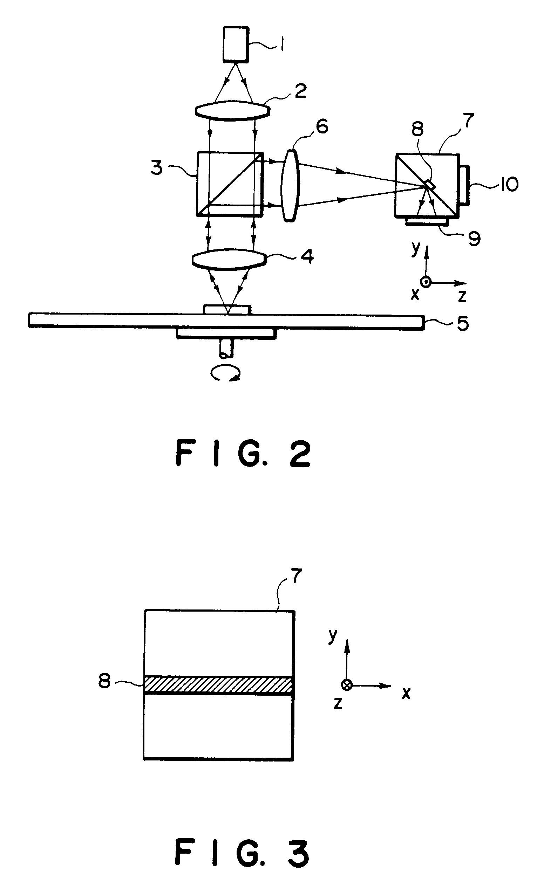

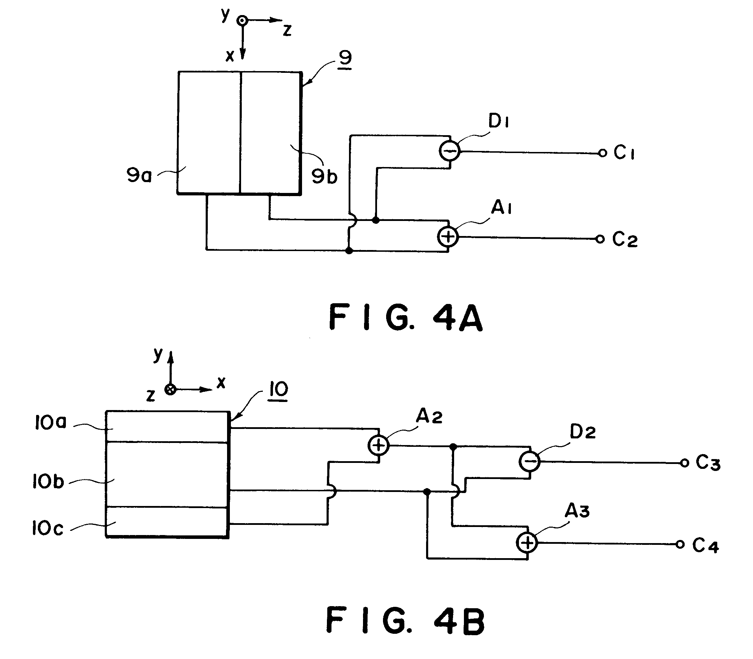

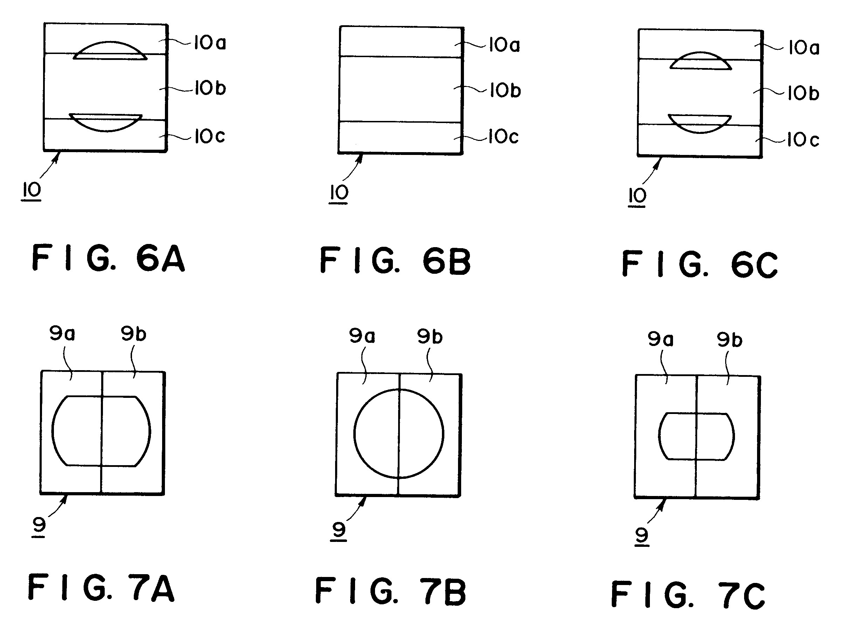

On the other hand, focus detectors which operate on different principles than that of the above apparatus are shown and described in U.S. Patent 3,997,715, Fig. 7 and specification Column 6, line 3 - Column 7, line 11, U.S. Patent 4,654,839, Fig. 4A - Fig. 4D and specifications Column 4, line 52 - Column 5, line 65, and U.S. Patent application Serial No. 739,342 (filed on May 21, 1985 and assigned to the assignee of the present invention), Figs. 3 - 5C and specification page 6, line 7 - page 9, line 7. In those apparatus, the focused light beam reflected from a workpiece is split into a peripheral portion and a center portion and the respective split light beams are sensed by separate photo-detectors. A focusing error signal is obtained by finite difference of the outputs of the photo-detectors.

In those focus detectors, however, if the optical axis is inclined, the proportions of the light amounts of the split light beam change and correct focus detection is difficult to attain.

Another construction of focus detector is disclosed in European Patent Application 0070552. This known focus detector includes a photo detector which has a photosensitive region and a photoinsensitive region and which is located near the focus of a detection beam. Whether or not the beam is properly focussed is determined by the ratio of the beam falling on the photosensitive and the photoinsensitive regions of the photodetector. An error signal is generated when this ratio is representative of an out of focus condition. However a disadvantage of this prior art arrangement is that, whilst it can detect defocussing, it cannot indicate the direction of the defocussing, i.e. whether the image of the light source is in front of or behind the photodetector.

SUMMARY OF THE INVENTION

A focus detector comprising:
means for irradiating a focused light beam onto a surface to be examined;
means for re-focussing said irradiation light beam reflected by or passed through the surface, thus forming a detection light beam;
an optical element for splitting said detection light beam;
a first light detector;
a second light detector for generating a focus error signal;
characterised in that:
said optical element is located in the vicinity of a focus point of said detection light beam;
said optical element directs the entire detection light beam towards said first light detector when the irradiation light beam is focussed on the surface;
said optical element directs a portion of the detection light beam towards said second light detector when the irradiation light beam is not focussed on the surface.

## BRIEF DESCRIPTION OF THE DRAWINGS

How the invention may be carried out will now be described by way of example only and with reference to the accompanying drawings in which:

Figs. 1A - 1C illustrate a principle of focus detection by a conventional knife edge method,

Fig. 2 shows a first embodiment of the present invention applied to a disk apparatus,

Fig. 3 shows an optical element of the first embodiment,

Figs. 4A and 4B show sensor and signal processing circuit of the first embodiment,

Figs. 5A - 7C illustrate a principle of focus detection in the first embodiment,

Figs. 8 and 9 show signal outputs produced in the first embodiment,

Fig. 10 illustrates light beam shift in the first embodiment.

Fig. 11 shows a modification of optical element arrangement in the first embodiment,

Figs. 12 and 13 show modifications of the sensor in the first embodiment,

Figs. 14 and 15 show modifications of the optical element in the first embodiment,

Fig. 16 shows a second embodiment of the present invention,

Figs. 17A and 17B show an optical element in the second embodiment,

Fig. 18 shows sensor and signal processing circuit in the second embodiment,

Figs. 19A, 19B and 19C illustrate a principle of focus detection in the second embodiment,

Fig. 20 shows a third embodiment of the present invention,

Figs. 21A and 21B show optical elements in the third embodiment,

Fig. 22 shows sensor and signal processing circuit in the third embodiment,

Figs. 23A, 23B and 23C illustrate a principle of focus detection in the third embodiment,

Fig. 24 shows a fourth embodiment of the present invention,

Fig. 25 shows a positional relationship of an optical element and a detected light beam in the fourth embodiment, and

Fig. 26 shows sensor and signal processing circuit in the fourth embodiment.

## DETAILED DESCRIPTION OF THE PREFERRED EMBODIMENTS

Fig. 2 shows a first embodiment of the focus detector of the present invention applied to an optical disk apparatus. A light emitted from a light source 1 such as a semiconductor laser is collimated by a collimater lens 2, passes through a beam splitter 3 and is focused by an objective lens 4 onto a rotating disk 5 which is an object to be tested. The light beam reflected by the disk 5 passes through the objective lens 4 and is reflected by the beam splitter 3 and again focused by a sensor lens 6 to form a detection light beam. An optical element 7 which comprises junction of triangular prisms and has a stripe-shaped reflection area 8 formed on a portion of the junction plane is arranged in a light path near a focus point of the detection light beam. A sensor 9 which senses the detection light beam reflected by the reflection area 8 is arranged on one surface of an outer periphery of the optical element 7, and a sensor 10 which senses a portion of the detection light beam which is not reflected by the reflection area 8 but separated is provided on the other surface.

Fig. 3 shows a side view of the optical element 7 as viewed in Z direction. The reflection area 8 is of stripe shape having a predetermined width so that it totally reflects the detection beam flux and directs it to the sensor 9 when the irradiated light beam is in the in-focus state on the disk 5 as shown in Fig. 2. The stripe-shaped reflection area 8 thus has a width corresponding to a light beam diameter (beam waist) at the focus point. The optical element 7 is arranged such that the y-axis thereof is parallel to a longitudinal direction of a track on the disk 5. A longitudinal direction of the stripe-shaped reflection area 8 corresponds to an orthogonal direction to the track.

The sensor 9 has a photo-sensing plane thereof split to sections 9a and 9b by a split line parallel to the longitudinal direction of the track as shown in Fig. 4A. Signals produced by the photo-sensing planes 9a and 9b are finitely differentiated by a subtractor $D_1$ so that a tracking signal indicating a positional deviation of the irradiated light beam from the track is produced at a terminal $C_1$ by a well-known tracking signal detection principle (so-called push-pull method). The outputs of the photo-sensing planes 9a and 9b are summed by an adder $A_1$ and a sum signal is produced at a terminal $C_2$.

On the other hand, the sensor 10 has a photo-sensing plane thereof split into three sections 10a, 10b and 10c by two split lines parallel to the normal line to the track as shown in Fig. 4B.

The signals of the photo-sensing planes 10a and 10c are summed in an adder $A_2$ and a sum signal and the output signal of the photo-sensing plane 10b are finitely differentiated by a subtractor $D_2$ so that a focus error signal is produced at a terminal $C_3$. The output of the adder $A_2$ and the photo-sensing plane 10b are summed by an adder $A_3$ and a sum signal is produced at a terminal $C_4$. A sum of the outputs at the terminals $C_2$ and $C_4$ represents a total light intensity of the detection light beam, and a reproduced RF signal corresponding to the information recorded on the disk 5 is produced by adding those signals.

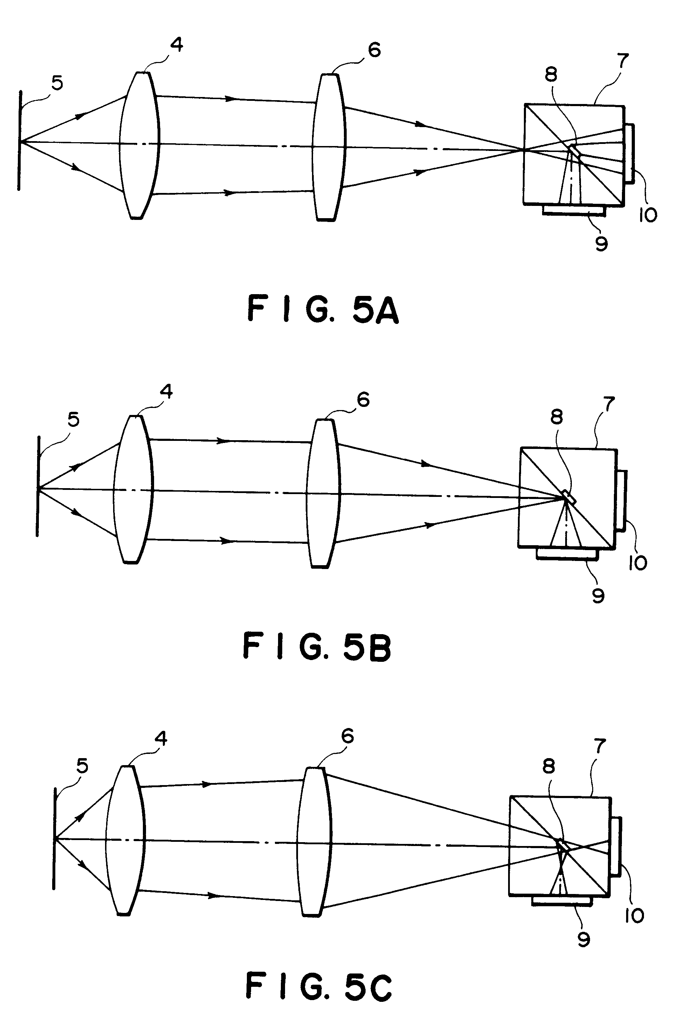

Referring to Figs. 5A to 7C, the principle of focus detection in the present invention is explained.

Only the detection system of the previous embodiment is shown in a simplified form, and the like elements to those shown in the previous embodiment are designated by the like numerals and detailed explanation thereof is omitted. Figs. 6A - 6C and Figs. 7A - 7C show light distributions on the sensors 10 and 9 corresponding to the states shown in Figs. 5A - 5C, respectively.

In the in-focus state shown in Fig. 5B, the detection light beam is directed to the reflection area 8 at the focus point and totally reflected thereby and sensed only by the sensor 9 as shown in Fig. 7B. Accordingly, as shown in Fig. 6B, the light does not reach the sensor 10 and no output in produced at the terminal $C_3$ of Fig. 4B. As the disk 5 moves away as shown in Fig. 5A, the focus point of the detection light beam moves forward and the detection light beam overflows from the reflection area 8 and a portion thereof is split and detected by the sensor 10. A portion of an arcuate spot is directed to the photo-sensing plane of the sensor 10 as shown in Fig. 6A. Since the light intensity of the photo-sensing planes 10a and 10c is larger than the light intensity of the photo-sensing plane 10b, a positive focus error signal is produced at the terminal $C_3$ of Fig. 4B. As the disk 5 further moves away, the spot directed to the sensor 10 spreads and the difference between the photo-sensing plane light intensities further increases. As a result, a focus error signal of a magnitude corresponding to the defocus amount of the disk 5 from the in-focus position is produced at the terminal $C_3$.

On the other hand, as the disk 5 moves close as shown in Fig. 5C, the focus point of the detection light beam moves backward and the detection light beam again overflows from the reflection area 8 and a portion thereof is split and directed to the sensor 10. Since the light intensity of the photo-sensing zones 10a and 10c is smaller than the light intensity of the photo-sensing plane 10b as opposed to the case of Fig. 5A, a negative focus error signal is produced at the terminal $C_3$ of Fig. 4B. The magnitude of the focus error signal represents the defocus amount of the disk 5 from the in-focus position.

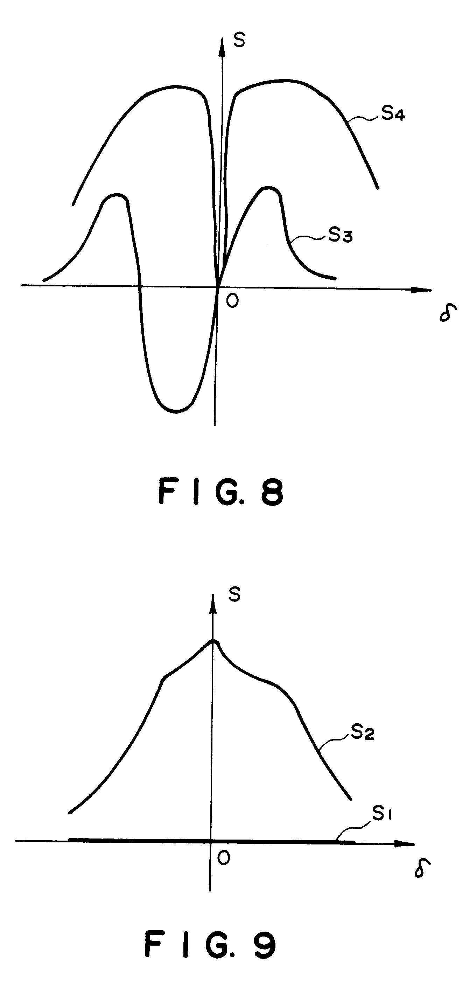

Figs. 8 and 9 show signal outputs of the sensors 10 and 9, respectively, $S_1$, $S_2$, $S_3$ and $S_4$ show outputs at the terminals $C_1$, $C_2$, $C_3$ and $C_4$ of Figs. 4A and 4B, respectively. An abscissa represent the defocus amount $\delta$ of the disk 5 from the in-focus position and an ordinate represents the magnitude S of the signal output. In accordance with the present embodiment, the focus error signal

$S_3$ representing the direction and magnitude of defocusing is produced at the terminal $C_3$. As seen from Fig. 9, the tracking signal $S_1$ is always zero irrespective of $\delta$ so that the tracking detection is not affected by the defocusing.

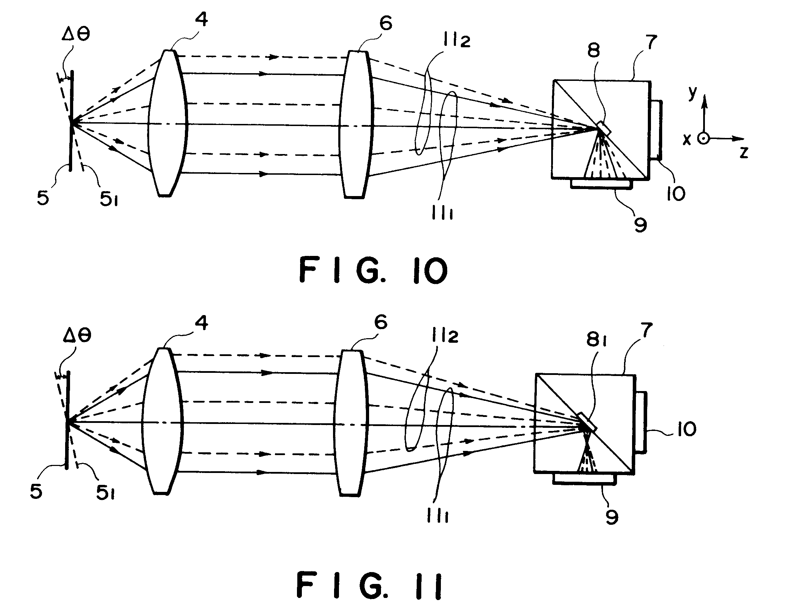

In the present embodiment, the focus error signal is not affected by the inclination of the disk 5. For example, as shown by broken lines in Fig. 10, when the disk 5 inclines by $\Delta\theta$ as shown by $5_1$ and the detection light beam $11_1$ is shifted as shown by $11_2$, the detection light beam is not applied to the sensor 10 and no malfunction occurs because the reflection area 8 is located at the focus point. The focus error signal is also not affected by the shift of the light beam when the tracking objective lens 4 is moved in the x direction or by the change of light intensity distribution in the detection light beam. In the present embodiment, since the reflection area 8 is of stripe shape, a positional accuracy of the optical element 7 in the x direction need not be very high and the optical adjustment can be attained by moving the optical element 7 only in the y direction.

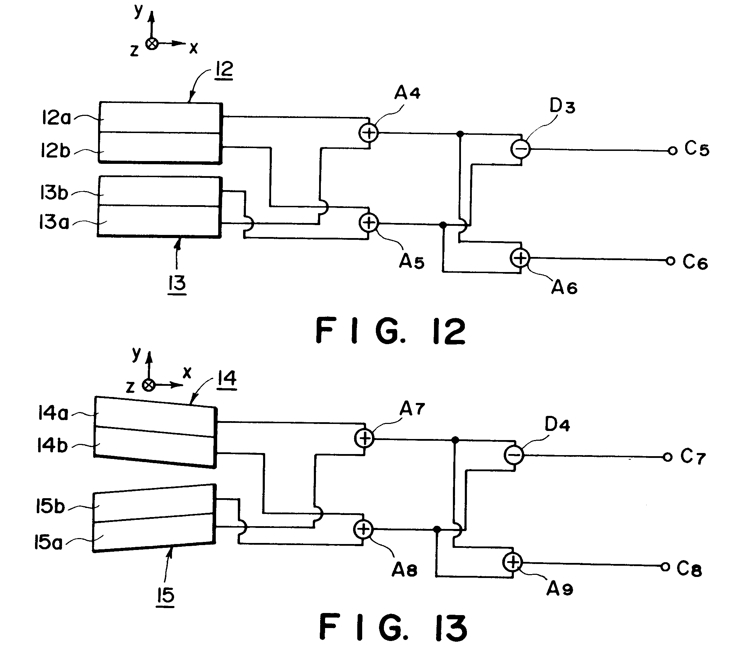

In the present embodiment, the reflection area 8 is located at the focus point of the detection light beam. Alternatively, as shown in Fig. 11, the reflection area $8_1$ may be located at other than the focus point in the vicinity of the focus point if the width of the reflection area $8_1$ is selected somewhat wider so that the shift of the light beam does not affect to the focus error signal. However, in this case, the reflection area $8_1$ must be located between a front focus point and a rear focus point of the detection light beam when the defocusing is along the optical axis. In Figs. 10 and 11, the like elements to those shown in Fig. 5A are designated by the like numerals and detailed explanation thereof is omitted.

Fig. 12 shows a modification of the sensor in the first embodiment. The sensor 10 in Fig. 2 may be replaced by two sensors 12 and 13 each having the photo-sensing plane thereof split into the sections 12a and 12b, and 13a and 13b. The outputs from the respective photo-sensing planes are applied to adders $A_4$, $A_5$ and $A_6$ and a subtracter $D_3$ as shown and a focus error signal and a light intensity signal are produced at terminals $C_5$ and $C_6$, respectively, by the same principle as that of the previous embodiment. The present embodiment is effective when it is difficult to manufacture a large size sensor, or when a manufacturing precision of the reflection area 8 is not sufficient to prevent leakage of the light so that a ghost light is created between the sensors 12 and 13. The sensor 10 of Fig. 2 may be replaced by sensors 14 and 15 shown in Fig. 13 in which a split line of photo-sensing planes 14a and 14b and a split line of photo-sensing planes 15a and 15b are not parallel but are angled to each other. The outputs from the respective photo-sensing planes are supplied to adders $A_7$, $A_8$ and $A_9$ and a subtractor $D_4$ as shown, and a focus error signal and a light intensity signal are produced at terminals $C_7$ and $C_8$ by the same principle as that of the previous embodiment. In the present embodiment, in addition to the advantages of the embodiment of Fig. 12, a ratio of light beam split can be controlled by moving the sensors 14 and 15 in the x direction because the spacing between the split lines of the photo-sensing planes varies along the x direction. Thus, the manufacturing error of the optical element can be compensated in the adjustment stage of the optical system. The sensors 9 and 10, 12 and 13 or 14 and 15 may be integrated with the optical element 7 or they may be bonded to the outer peripheral surfaces of the optical element 7.

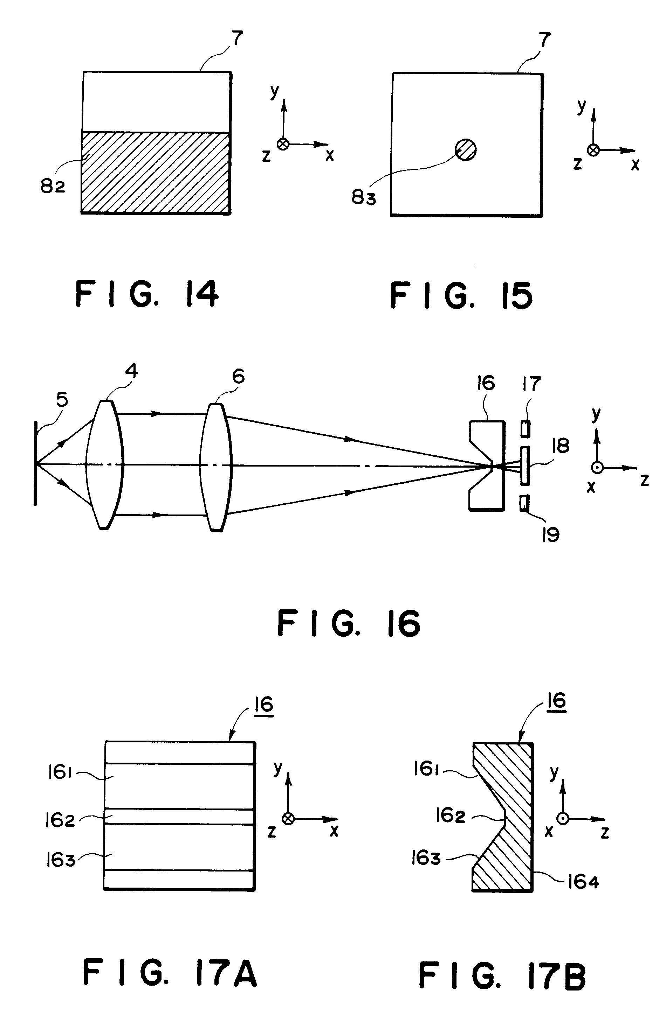

The reflection area of the optical element 7 need not be of stripe shape but it may be a divided reflection area so that a split line thereof is displaced with regard to the center portion of incident light beam as shown by hatched area $8_2$ of Fig. 14. In this case, the optical adjustment is easy because only one of the two split light beam spots shown in Fig. 6A is created. The reflection area need not be of stripe shape but it may be of circle having a predetermined area as shown by a hatched area $8_3$ of Fig. 15. In this case, the focus error signal is produced in the same manner as that of the previous embodiment.

Fig. 16 shows a second embodiment of the present invention. While only the detection system is shown in a simplified form, the illumination system may be of the same construction as that of Fig. 2. The like elements to those shown in Fig. 2 are designated by the like numerals and detailed explanation thereof is omitted. In the present embodiment, a transmission type optical element 16 is used in place of the optical element 7. As shown in a plan view of Fig. 17A and a sectional view of Fig. 17B, the optical element 16 is basically a plate-like member which is made of transparent material such as glass or plastic. It has a stripe-shaped area $16_2$ at the center, which is parallel to the opposing plane $16_4$, and outer areas $16_1$ and $16_3$ thereof are inclined with respect to the plane $16_4$. A sensor 18 for sensing a detection light beam which passed through the plane $16_2$ is provided on the back side of the optical element 16. Sensors 17 and 19 which sense portions of the detection light beam applied to and refracted by the inclined planes $16_1$ and $16_3$ of the optical element 16 in the defocus state.

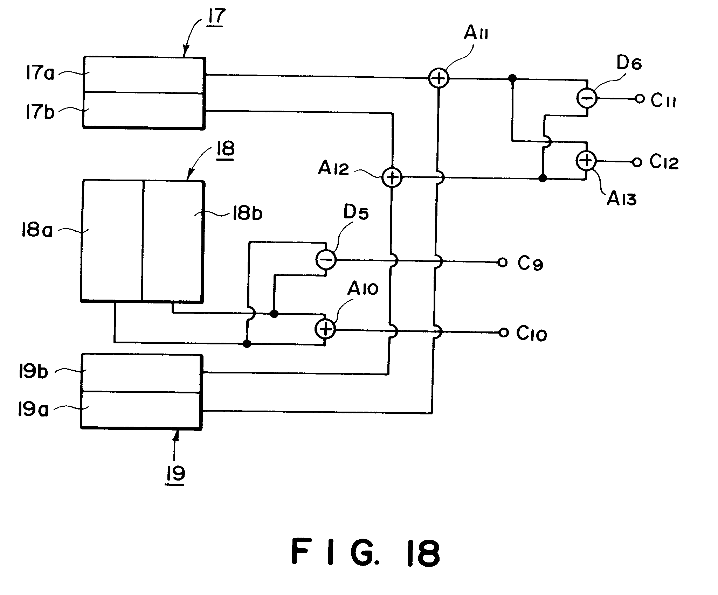

Fig. 18 shows the photo-sensing planes of the sensors and a signal processing circuit in the present embodiment. The sensor 18 has the photo-sensing plane thereof split into two sections 18a and 18b by a split line parallel to the longitudinal direction of the track. The signals from the respective photo-sensing planes are summed and subtracted by an adder $A_{10}$ and a subtractor $D_5$, respectively, so that a light intensity signal and a tracking signal are produced at terminals $C_{10}$ and $C_9$, respectively. The sensors 17 and 19 each has the photo-sensing plane thereof split into two sections 17a and 17b, and 19a and 19b by a split line parallel to a normal line to the track. The outputs from the photo-sensing planes 17a and 19a and the outputs from the photo-sensing planes 17b and 19b are summed by address $A_{11}$ and $A_{12}$, respectively. Sum signals from the address $A_{11}$ and $A_{12}$ are summed and subtracted by an adder $A_{13}$ and a subtractor $D_6$, respectively, so that a focus error signal and a light intensity signal are produced at terminals $C_{11}$ and $C_{12}$, respectively. A reproduced RF signal is produced by summing the outputs of the terminals $C_{10}$ and $C_{12}$.

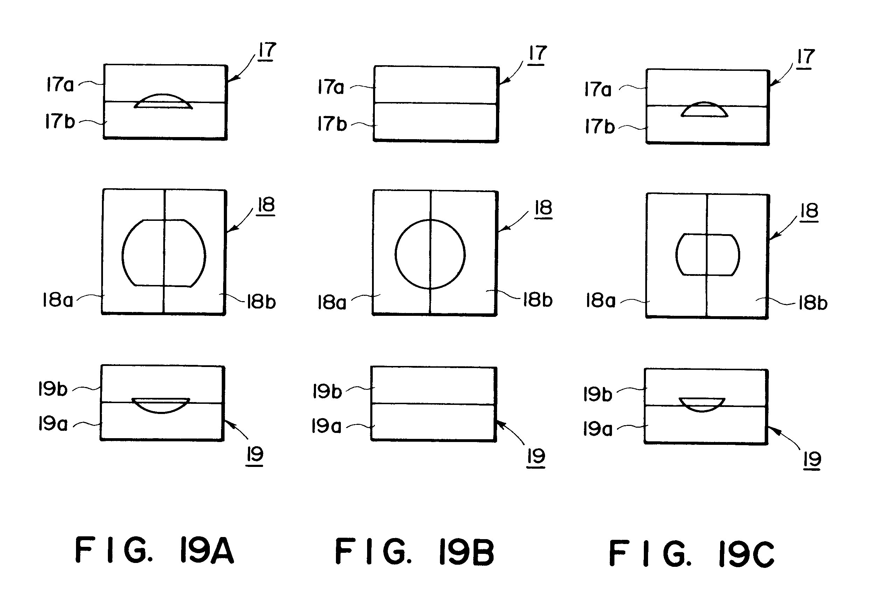

Figs. 19A to 19C show detection light beams on the sensor planes in various focus states. The principle of the focus detection in the present embodiment is basically identical to that of the first embodiment. For example, in the in-focus state, the detection light beam totally passes through a parallel plane $16_2$ of the optical element 16 and is directed only to the sensor 18 as shown in Fig. 19B. As a result, no focus error signal is produced. The stripe-shaped parallel plane $16_2$ has a width corresponding to a beam waist of the detection light beam. As the disk 5 moves away, the detection light beam overflows from the plane $16_2$ of the optical element 16, is refracted by the inclined planes $16_1$ and $16_3$ so that a portion of the light beam is split and it is sensed by the sensors 17 and 19 as shown in Fig. 19A. The light intensities of the photo-sensing planes 17b and 19b are larger than the light intensities of the photo-sensing planes 17a and 19a so that a positive focus error signal is produced at a terminal $C_{11}$ of Fig. 18. On the other hand, when the disk 5 approaches too close to the objective lens 4, the detection light beam is split by the optical element 16 and directed to the sensors 17 and 19 as shown in Fig. 19C. In this case, the light intensities of the photo-sensing planes 17a and 19a are larger than the light intensities of the photo-sensing planes 17b and 19b, and a negative focus error signal is produced at the terminal $C_{11}$ of Fig. 18.

In the present embodiment, the focus error signal is detected without affecting to the tracking signal, as is done in the first embodiment. The present embodiment is similar to the first embodiment in that a malfunction due to the inclination of the disk is hard to occur.

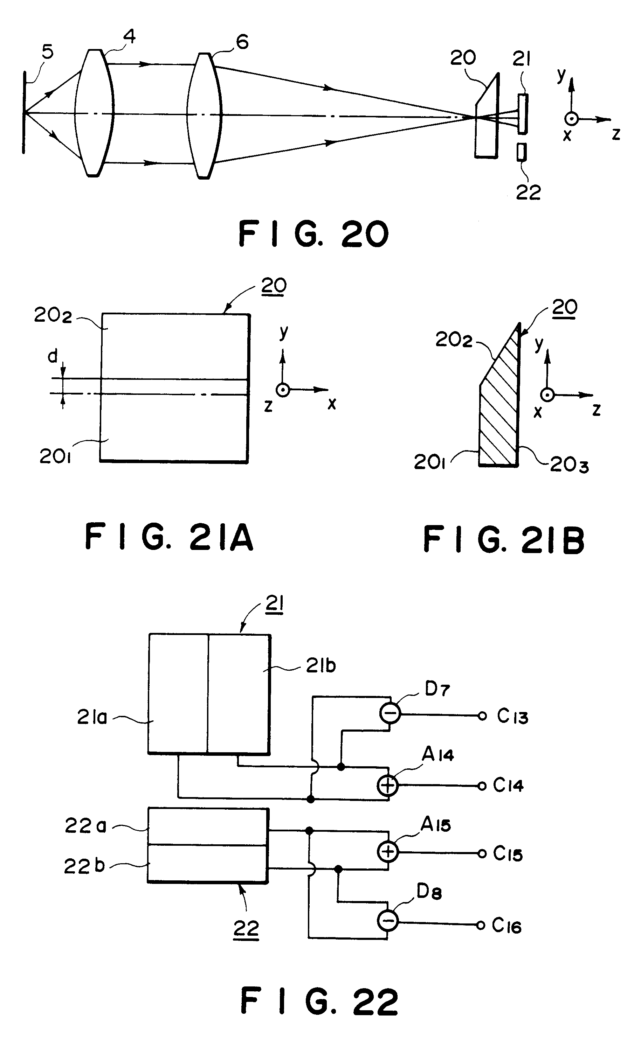

Fig. 20 shows a third embodiment of the present invention. While only the detection system is shown in a simplified form, the illumination system may be identical to that of Fig. 2. The like elements to those shown in Fig. 2 are designated by the like numerals and detailed description thereof may be omitted. In the present embodiment, a transmission type optical element 20 is used in place of the optical element 7 of Fig. 2. As shown in a plan view of Fig. 21A and a sectional view of Fig. 21B, the optical element 20 is basically a plate-like member made of transparent material such as glass or plastic. One plane of the optical element 20 is split into a plane $20_1$ which is parallel to the other plane $20_3$ and a plane $20_2$ which is inclined with respect to the plane $20_3$. The optical element 20 is arranged in a light path of the detection light beam so that the split line is spaced from an optical axis by a distance d. A sensor 21 for sensing the detection light beam which passed through the plane $20_1$ and a sensor 22 which senses a portion of the detection light beam refracted by the inclined plane $20_2$ in the defocus state are arranged on the back side of the optical element 20.

Fig. 22 shows the photo-sensing planes of the sensors and a signal processing circuit in the present embodiment. The sensor 21 has the photo-sensing plane thereof split into two sections 21a and 21b by a split line parallel to the longitudinal direction of the track. The signals from the respective photo-sensing planes are summed and subtracted by an adder $A_{14}$ and a subtractor $D_7$, respectively, so that a light intensity signal and a tracking signal are produced at terminals $C_{14}$ and $C_{13}$, respectively. The sensor 22 has the photo-sensing plane thereof split into two sections 22a and 22b by a split line parallel to a normal line to the track. The outputs of the photo-sensing planes 22a and 22b are summed and subtracted by an adder $A_{15}$ and a subtractor $D_6$ so that a focus error signal and a light intensity signal are produced at terminals $C_{16}$ and $C_{15}$, respectively. A reproduced RF signal is produced by summing the outputs of the terminals $C_{14}$ and $C_{15}$.

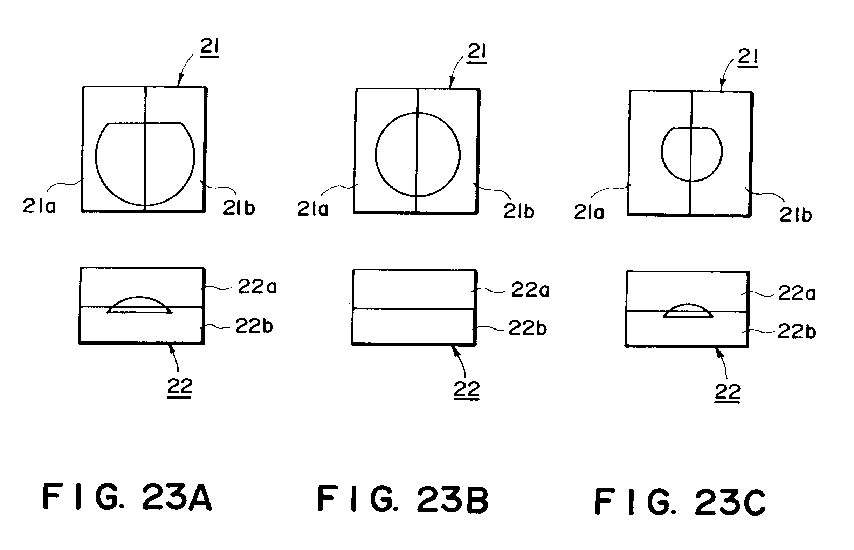

Figs. 23A to 23C show the detection light beams on the sensor planes in various focus states. The principle of the focus detection in the present embodiment is basically identical to that of the first embodiment. For example, in the in-focus state, the detection light beam totally passes through the parallel plane $20_1$ of the optical element 20 and is directed to only the sensor 21 as shown in Fig. 23B. As a result, no focus error signal is produced. As the disk 5 moves away, the detection light beam overflows from the plane $20_1$ of the optical element 20, is refracted by the inclined plane $20_2$ and a portion thereof is split and sensed by the sensor 22 as shown in Fig. 23A. The light intensity of the photo-sensing plane 22a is larger than the light intensity of the photo-sensing plane 22b so that a positive focus error signal is produced at the terminal $C_{16}$ of Fig. 22. On the other hand, when the disk 5 approaches too closely to the objective lens 4, the detection light beam is split by the optical element 20 and directed to the sensor 22 as shown in Fig. 23C. In this case, the light intensity of the photo-sensing plane 22b is larger than the light intensity of the photo-sensing plane 22a so that a negative focus error signal is produced at the terminal $C_{16}$ of Fig. 22. The present embodiment offers the same advantages as those which the first embodiment does.

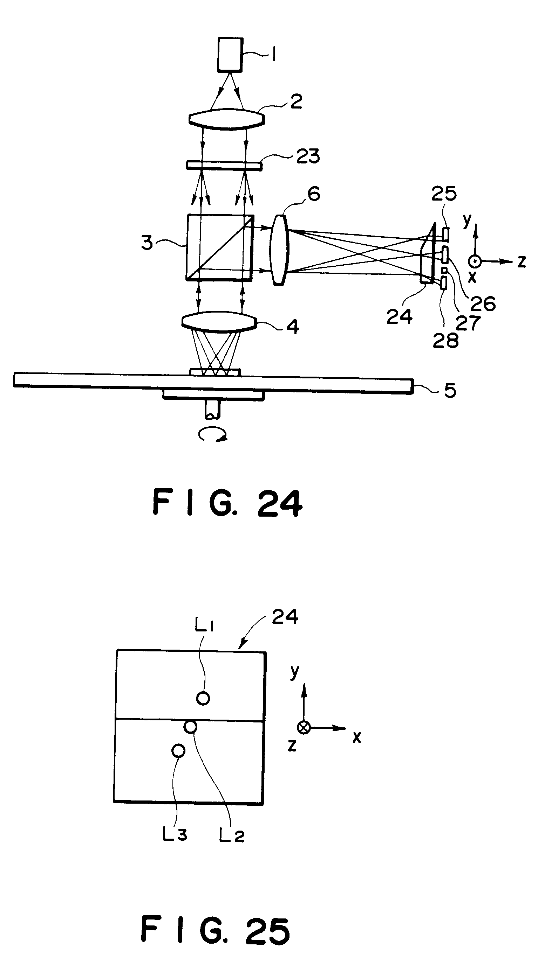

Fig. 24 shows a fourth embodiment of the focus detector of the present invention applied to an optical disk. The like elements to those shown in Fig. 2 are designated by the like numerals and detailed explanation thereof is omitted. In the present embodiment, a diffraction grating 23 is arranged in a light path of an illumination light beam so that it splits the light beam into three beams to form three spots on the disk 5. The spots are irradiated such that the center spot is directed to the center of the track on the disk 5 and the spots at the opposite ends are halfly directed to the opposite sides of the track. The light reflected by the center spot is sensed by the sensors 26 and 27 to detect the reproduced RF signal and the focusing signal, and the lights reflected by the opposite end spots are sensed by the sensors 25 and 28 to produce the tracking signal by a well-known three-beam method.

The optical element 24 which is identical to the optical element 20 of the third embodiment is arranged in the light path of the reflected light beam, and three light beams $L_1$, $L_2$ and $L_3$ corresponding to the three spots are directed to the optical element 24 as shown in Fig. 25.

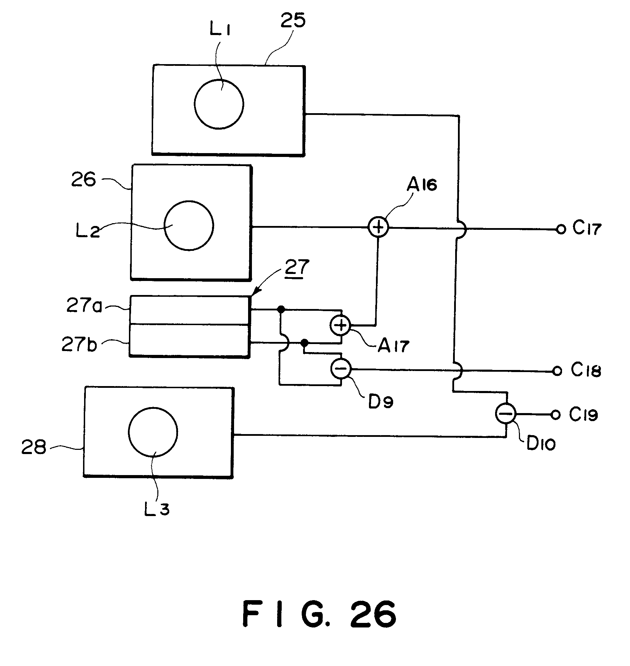

Fig. 26 shows the photo-sensing planes of the sensors and a signal processing circuit in the present embodiment. The light beams $L_1$, $L_2$ and $L_3$ are sensed by the sensors 25, 26 and 28, respectively. The sensor 27 senses a portion of the light beam $L_2$ split by the optical element 24 in the defocus state. The principle of detection of the focus error signal from the light beam $L_2$ is same as that in the third embodiment and the explanation thereof is omitted. The outputs of the split photo-sensing planes 27a and 27b of the sensor 27 are differentiated by a subtractor $D_9$ so that the focus error signal is produced at the terminal $C_{16}$. The outputs from the photo-sensing planes 27a and 27b are summed by an adder $A_{17}$ and a sum signal is added to the output of the sensor 26 by an adder $A_{16}$ so that a reproduced RF signal is produced at the terminal $C_{17}$. The outputs of the sensors 25 and 28 are finitely differentiated by a subtractor $D_{10}$ by the three-beam method so that the tracking signal is produced at the terminal $C_{19}$.

The present invention is not limited to the illustrated embodiments but various modifications thereof may be made. For example, a half-mirror may be provided in a light path of the detection light beam and a light beam split thereby may be sensed by a separate sensor to produce the reproduced RF signal.

Where the object to be tested is transparent, the focus error signal may be produced by a light beam which passed through the object. The present invention is applicable to not only the disk apparatus but also other optical information recording and reproducing apparatus and an optical instrument such as a shape detector or range finder.

The present invention covers all such modifications without departing from the scope of the claims.

## Claims

1. A focus detector comprising:

   means (1-4) for irradiating a focused light beam onto a surface (5) to be examined;

   means (6) for re-focussing said irradiation light beam reflected by or passed through the surface, thus forming a detection light beam;

   an optical element (7,8) for splitting said detection light beam;

   a first light detector (9);

   a second light detector (10) for generating a focus error signal ($S_3$);

   characterised in that:

   said optical element (7,8) is located in the vicinity of a focus point of said detection light beam;

   said optical element (7,8) directs the entire detection light beam towards said first light detector (9) when the irradiation light beam is focussed on the surface (5);

   said optical element (7,8) directs a portion of the detection light beam towards said second light detector (10) when the irradiation light beam is not focussed on the surface.

2. A focus detector according to claim 1, wherein said irradiation means comprises a light source (1) and a first lens system (2,4) for focusing a light beam emitted from said light source (1) onto said surface (5).

3. A focus detector according to claim 2 wherein said focussing means (6) consists of a second lens system.

4. A focus detector according to claim 1, wherein said optical element (7) comprises a reflection plane having a boundary to a transmissive section (8) out of a light path of the detection light beam in an in-focus state of the irradiation light beam.

5. A focus detector according to claim 4, wherein said reflection plane is of stripe shape (8) having a width corresponding to a beam waist of the detection light beam.

6. A focus detector according to claim 5, wherein said surface (5) has a track thereon and a longitudinal direction of said stripe-shaped (8) reflection plane is substantially orthogonal to the track.

7. A focus detector according to claim 1, wherein said second light detector (10) has a two-split photo-receiving plane for receiving part of the detection light beam from said optical element (7,8), and the focus error signal ($S_3$) is obtained by differentiating output signals from the respective photo-receiving planes.

8. A focus detector according to claim 1, wherein said surface is an information record surface having a track thereon, and said second photo-detector detects at least one of an information signal and a tracking signal.

9. A focus detector according to claim 1, wherein said optical element comprises a plate-like transparent member (20,24) with one side thereof being planar and the other side thereof having a plane parallel to said one side and a plane inclined with respect to said one side, therein a boundary thereof being out of a light path of the detection light beam in an in-focus state of the irradiation light beam.

10. A focus detector according to claim 9, wherein said parallel plane is of stripe shape having a width corresponding to a beam waist of the detection light beam.

11. A focus detector according to claim 10, wherein said surface has a track thereon and a longitudinal direction of said stripe-shaped parallel plane is substantially orthogonal to the track.

## Revendications

1. Détecteur de mise au point comportant :

   des moyens (1-4) destinés à projeter un faisceau lumineux focalisé sur une surface (5) à examiner ;

   des moyens (6) destinés à refocaliser ledit faisceau lumineux projeté, réfléchi par, ou transmis à travers, la surface, formant ainsi un faisceau lumineux de détection ;

un élément optique (7, 8) destiné à diviser ledit faisceau lumineux de détection ;

un premier détecteur (9) de lumière ;

un second détecteur (10) de lumière destiné à générer un signal ($S_3$) d'erreur de mise au point ;

caractérisé en ce que :

ledit élément optique (7, 8) est placé au voisinage d'un point focal sur ledit faisceau lumineux de détection ;

ledit élément optique (7, 8) dirige l'ensemble du faisceau lumineux de détection vers ledit premier détecteur de lumière (9) lorsque le faisceau lumineux projeté est focalisé sur la surface (5) ;

ledit élément optique (7, 8) dirige une partie du faisceau lumineux de détection vers ledit second détecteur de lumière (10) lorsque le faisceau lumineux projeté n'est pas focalisé sur la surface.

2. Détecteur de mise au point selon la revendication 1, dans lequel ledit moyen de projection comprend une source de lumière (1) et un premier système de lentilles (2, 4) destiné à mettre au point un faisceau lumineux émis par ladite source de lumière (1) sur ladite surface (5).

3. Détecteur de mise au point selon la revendication 2, dans lequel lesdits moyens (6) de mise au point comprennent un second système de lentilles.

4. Détecteur de mise au point selon la revendication 1, dans lequel ledit élément optique (7) comprend un plan de réflexion ayant une limite avec une partie transmissive (8) en dehors d'un trajet de lumière du faisceau lumineux de détection dans un état au point du faisceau lumineux projeté.

5. Détecteur de mise au point selon la revendication 4, dans lequel ledit plan de réflexion a la forme d'une bande (8) ayant une largeur correspondant à un ventre du faisceau lumineux de détection.

6. Détecteur de mise au point selon la revendication 5, dans lequel ladite surface (5) porte une piste et une direction longitudinale dudit plan de réflexion en forme de bande (8) est sensiblement orthogonale à la piste.

7. Détecteur de mise au point selon la revendication 1, dans lequel ledit second détecteur de lumière (10) présente un plan de photo-réception à deux divisions destiné à recevoir une partie du faisceau lumineux de détection provenant dudit élément optique (7, 8), et le signal ($S_3$) d'erreur de mise au point est obtenu par une différenciation des signaux de sortie provenant des plans respectifs de photo-réception.

8. Détecteur de mise au point selon la revendication 1, dans lequel ladite surface est une surface d'enregistrement d'information portant une piste, et ledit second photo-détecteur détecte au moins l'un d'un signal d'information et d'un signal de poursuite.

9. Détecteur de mise au point selon la revendication 1, dans lequel ledit élément optique comprend un élément transparent (20, 24) analogue à une plaque dont une première face est plane et l'autre face possède un plan parallèle à ladite première face et un plan incliné par rapport à ladite première face, dans lequel une limite est en dehors d'un trajet lumineux du faisceau lumineux de détection dans un état au point du faisceau lumineux projeté.

10. Détecteur de mise au point selon la revendication 9, dans lequel ledit plan parallèle est en forme de bande ayant une largeur correspondant à un ventre du faisceau lumineux de détection.

11. Détecteur de mise au point selon la revendication 10, dans lequel ladite surface porte une piste et une direction longitudinale dudit plan parallèle en forme de bande est sensiblement orthogonale à la piste.

**Patentansprüche**

1. Fokusdetektor, der

eine Einrichtung (1 bis 4) zum Bestrahlen einer zu untersuchenden Fläche (5) mit einem fokussierten Lichtstrahlenbündel,

eine Einrichtung (6) zum erneuten Fokussieren des von der Fläche reflektierten oder durch die Fläche durchgelassenen Bestrahlungs-Lichtstrahlenbündels zu einem Meßlichtstrahlenbündel,

ein optischen Element (7, 8) zum Teilen des Meßlichtstrahlenbündels,

einen ersten Fotodetektor (9) und

einen zweiten Fotodetektor (10) zum Erzeugen eines Fokossierfehlersignals ($S_3$) aufweist,

dadurch gekennzeichnet, daß

das optische Element (7, 8) in der Nähe eines Brennpunkts des Meßlichtstrahlenbündels angeordnet ist,

das optische Element (7, 8) das ganze Meßlichtstrahlenbündel zu dem ersten Fotodetektor (9) hin richtet, wenn das Bestrahlungs-Lichtstrahlenbündel auf der Fläche (5) fokussiert ist, und

das optische Element (7, 8) einen Teil des Meßlichtstrahlenbündels zu dem zweiten Fotodetektor (10) hin richtet, wenn das Bestrahlungs-Lichtstrahlenbündel nicht auf der Fläche fokusiert ist.

2. Fokusdetektor nach Anspruch 1, bei dem die Bestrahlungseinrichtung eine Lichtquelle (1) und ein erstes Linsensystem (2, 4) zum Fokussieren eines von der Lichtquelle (1) abgegebenen Lichtstrahlenbündels auf der Fläche (5) aufweist.

3. Fokusdetektor nach Anspruch 2, bei dem die Fokussiereinrichtung (6) aus einem zweiten Linsensystem besteht.

4. Fokusdetektor nach Anspruch 1, bei dem das optische Element (7) eine Reflexionsfläche (8) mit einer Grenze zu einem durchlässigen Abschnitt außerhalb eines Lichtwegs des Meßlichtstrahlenbündels bei einem Scharfeinstellungszustand des Bestrahlungs-Lichtstrahlenbündels aufweist.

5. Fokusdetektor nach Anspruch 4, bei dem die Reflexionsfläche die Form eines Streifens (8) mit einer Breite hat, die einer Strahlenbündeleinschnürung des Meßlichtstrahlenbündels entspricht.

6. Fokusdetektor nach Anspruch 5, bei dem die Fläche (5) eine Spur auf derselben hat und die Längsrichtung der streifenförmigen Reflexionsfläche (8) zu der Spur im wesentlichen rechtwinklig ist.

7. Fokusdetektor nach Anspruch 1, bei dem der zweite Fotodetektor (10) eine zweigeteilte Fotoaufnahmefläche zum Aufnehmen eines Teils des Meßlichtstrahlenbündels von dem optischen Element (7, 8) her hat und das Fokussierfehlersignal ($S_3$) durch Differenzbildung aus den Ausgangssignalen der jeweiligen Fotoaufnahmeflächen erhalten wird.

8. Fokusdetektor nach Anspruch 1, bei dem die Fläche eine Informationsaufzeichnungsfläche mit einer Spur auf derselben ist und der zweite Fotodetektor ein Informationssignal und/oder ein Spurnachfühlsignal erfaßt.

9. Fokusdetektor nach Anspruch 1, bei dem das optische Element ein plattenförmiges durchsichtiges Teil (20, 24) aufweist, dessen eine Seite flach und dessen andere Seite eine zu der einen Seite parallele Fläche und eine in Bezug auf die eine Seite schräge Fläche hat, wobei eine Grenze derselben außerhalb des Lichtwegs des Meßlichtstrahlenbündels bei dem Scharfeinstellungszustand des Bestrahlungs-Lichtstrahlenbündels liegt.

10. Fokusdetektor nach Anspruch 9, bei dem die parallele Fläche die Form eines Streifens mit einer Breite hat, die einer Strahlenbündeleinschnürung des Meßlichtstrahlenbündels entspricht.

11. Fokusdetektor nach Anspruch 10, bei dem die Fläche eine Spur auf derselben hat und die Längsrichtung der streifenförmigen parallelen Fläche zu der Spur im wesentlichen rechtwinklig ist.

Δθ

109

105

102

103

108

104

106

101  107

# FIG. IA
# PRIOR ART

105

101

102

103

104

106

# FIG. IB
# PRIOR ART

105

101

102

103

104

106

# FIG. IC
# PRIOR ART

FIG. 2

FIG. 3

EP 0 259 148 B1

F I G. 4A

F I G. 4B

F I G. 5A

F I G. 5B

F I G. 5C

EP 0 259 148 B1

10a

10b

10c

10

**F I G. 6A**

10a

10b

10c

10

**F I G. 6B**

10a

10b

10c

10

**F I G. 6C**

9a    9b

9

**F I G. 7A**

9a    9b

9

**F I G. 7B**

9a    9b

9

**F I G. 7C**

F I G. 8

F I G. 9

F I G. 10

F I G. II

EP 0 259 148 B1

F I G. 12

F I G. 13

F I G. 14

F I G. 15

F I G. 16

F I G. 17A

F I G. 17B

FIG. 18

F I G. 19A          F I G. 19B          F I G. 19C

EP 0 259 148 B1

F I G. 20

F I G. 21A

F I G. 21B

F I G. 22

FIG. 23A       FIG. 23B       FIG. 23C

EP 0 259 148 B1

F I G. 24

F I G. 25

# F I G. 26